# EUROPEAN PATENT APPLICATION

(11) **EP 4 492 595 A1**
(43) Date of publication of application: **15.01.2025**
(21) Application number: 23185093.4
(22) Date of filing: 12.07.2023
(51) Int. Cl.: H02B 11/04, H01B 3/30, H01B 17/26

(54) **BUSHING FOR A MEDIUM VOLTAGE SWITCHGEAR**

(71) Applicant: ABB SCHWEIZ AG, 5400 Baden (CH)
(72) Inventor: KALAB, Ctibor, 628 00 Brno (CZ); SKUCI, Michal, 602 00 Brno (CZ)
(74) Representative: Maiwald GmbH

(57) **Abstract**

The present invention relates to a bushing for a metal clad medium voltage switchgear, the bushing comprising:
- a hollow body (4); and
- a holder piece (2);
wherein the hollow body comprises polyamide;
wherein the holder piece comprises at least one metal;
wherein the holder piece comprises a body part and a shield (5);
wherein a first end of the hollow body is configured to connect to a compartment of a medium voltage switchgear;
wherein the holder piece is configured to connect a T-off bar (3) to a second end of the hollow body;
wherein the hollow body has an axis down the centre of the hollow body from the first end to the second end; and
wherein the shield of the holder piece is located adjacent to a part of the T-off bar when the T-off bar is connected to the second end of the hollow body.

## Description

### FIELD OF THE INVENTION

The present invention relates to a bushing for a medium voltage switchgear and a bushing system for a metal clad medium voltage switchgear and a holder piece for a bushing of a medium voltage switchgear.

### BACKGROUND OF THE INVENTION

In a medium voltage switchgear (or panel) with metal partitions, bushings are important parts of the panel. Bushings, which can also be called spouts (1 per phase) or monoblocks (1 for all 3 phases), can for example be used with circuit breaker compartments.

Bushings allow current flow between metal-clad switchgear through compartments, and need to operate with high current and/or high voltage parameters, and flashovers can occur between the joint of the T-off bar connection to the bushing and a metal partition plate that is nearby, or indeed flashovers can occur between T-offs of different phases as the filed intensity is too high in critical points and has to be lowered.

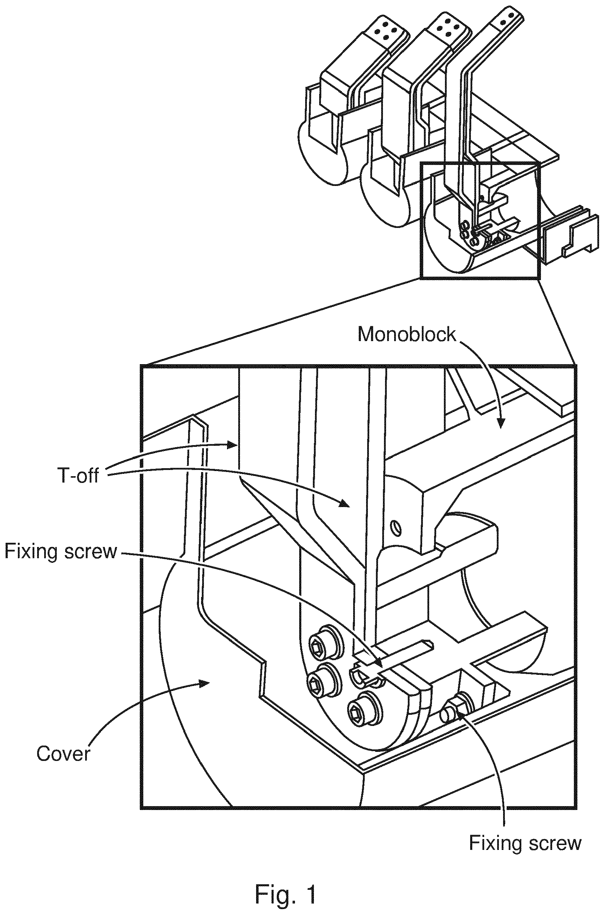

Fig. 1 shows a bushing with a T-off connection, where for example the bushing (spout) is mounted by 4 screws to a metal plate, such as a contact support, which forms a partition between a circuit breaker compartment and other compartments in the panel. Each spout has a special cover surrounding it and the connection area of the T-off to the busing to provide for flashover protection through field control. Fig. 1 shows an expanded view of one bushing/spout of three bushings or spouts of a three phase system, where each bushing or spout has an associated cover, but known connections can be in the form of a single bushing/spout that also has an associated cover.

The requirement to use such covers increases costs, can lead to installation problems as more space is required, and installation takes more time.

There is a need to address these issues.

### SUMMARY OF THE INVENTION

Therefore, it would be advantageous to have an improved bushing for a compartment of a medium voltage switchgear, such as an air or gas insulated switchgear.

The object of the present invention is solved with the subject matter of the independent claims, wherein further embodiments are incorporated in the dependent claims. It is to be noted that the busing is described with respect to a medium voltage air or gas insulated switchgear, but finds utility in other situations for the connection of high voltage current carrying conductors between compartments.

In an aspect, there is provided a bushing for a metal clad medium voltage switchgear, the bushing comprising:
- a hollow body; and
- a holder piece.

The hollow body comprises polyamide. Then holder piece comprises at least one metal. The holder piece comprises a body part and a shield. A first end of the hollow body is configured to connect to a compartment of a medium voltage switchgear. The holder piece is configured to connect a T-off bar to a second end of the hollow body. The hollow body has an axis down the centre of the hollow body from the first end to the second end. The shield of the holder piece is located adjacent to a part of the T-off bar when the T-off bar is connected to the second end of the hollow body.

In an example, the holder piece is configured to connect the T-off bar to the second end of the hollow body via at least one screw or bolt fixing the T-off bar to the body part of the holder piece.

In an example, the holder piece is fixedly attached to the second end of the hollow body.

In an example, the shield of the holder piece is located at an axial position of the axis down the centre of the hollow body and when the T-off bar is connected to the second end of the hollow body the T-off bar is located at the axial position.

In an example, the shield of the holder piece comprises two wing segments on either side of the body part of the holder piece.

In an example, the body part of the holder piece comprises a flat portion perpendicular to the axis down the centre of the hollow body. The flat portion of the body part of the holder piece comprises at least one fixing hole, and a flat portion of the part of the T-off is configured to connect to the flat portion of the holder piece.

In an example, the body part of the holder piece comprises a ridge section with an inner surface parallel to the axis down the centre of the hollow body. An end portion of the of the part of the T-off is configured to butt up against the inner surface of the ridge section of the body part of the holder piece when the T-off bar is connected to the second end of the hollow body.

In an example, an outer surface of the hollow body portion is chamfered such that the outer surface is angled to the axis down the centre of the hollow body in a direction from the first end of the body to the second end of the body.

In an example, the second end of the hollow body comprises a dielectric rim.

In an example, the first end of the body is configured to connect to the compartment of the switchgear via at least one assembly or assy groove.

In an aspect, there is provided a bushing system for a metal clad medium voltage switchgear, the bushing comprising:
- a hollow body; and
- a holder piece.

The hollow body comprises polyamide. The holder piece comprises at least one metal. The holder piece comprises a body part and a shield. A first end of the hollow body is configured to connect to a compartment of a medium voltage switchgear. The holder piece is configured to connect to the hollow body. The holder piece is configured to connect a T-off bar to a second end of the hollow body. The hollow body has an axis down the centre of the hollow body from the first end to the second end. The shield of the holder piece is located adjacent to a part of the T-off bar when the T-off bar is connected to the second end of the hollow body.

In an example, the holder piece is configured to connect to plate or rim of the second end of the hollow body via at least one screw or bolt fixing the holder piece to the plate or rim.

In an example, the holder piece is configured to connect the T-off bar to the second end of the hollow body via at least one screw or bolt fixing the T-off bar to the body part of the holder piece.

In an example, the shield of the holder piece is configured to be located at an axial position of the axis down the centre of the hollow body when the holder piece is connected to the hollow body, and when the T-off bar is connected to the second end of the hollow body the T-off bar is located at the axial position.

In an aspect, there is provided a holder piece for a bushing of a metal clad medium voltage switchgear. The bushing comprises a hollow body, and the hollow body comprises polyamide, and a first end of the hollow body is configured to connect to a compartment of a medium voltage switchgear, and the hollow body has an axis down the centre of the hollow body from the first end to a second end. The holder piece comprises at least one metal. The holder piece comprises a body part and a shield. The holder piece is configured to connect to the hollow body of the bushing. The holder piece when connected to the hollow body is configured to connect a T-off bar to the second end of the hollow body. When the holder piece is connected to the hollow body of the bushing, the shield of the holder piece is located adjacent to a part of the T-off bar when the T-off bar is connected to the second end of the hollow body.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic representation of an example of an existing bushing or spout for a metal clad medium voltage switchgear that is one of three bushings or spouts of a three phase system where each bushing or spout has an associated cover;
Fig. 2 shows a schematic example of a hollow body of a bushing or spout; and
Fig. 3 shows isometric views of a new bushing or spout for a metal clad medium voltage switchgear along with views of the holder piece and with the T-off shown connected the holder piece and the holder piece connected to the hollow body as shown in Fig. 2 - however the holder piece can be an integral part of the bushing or spout.

### DETAILED DESCRIPTION OF EMBODIMENTS

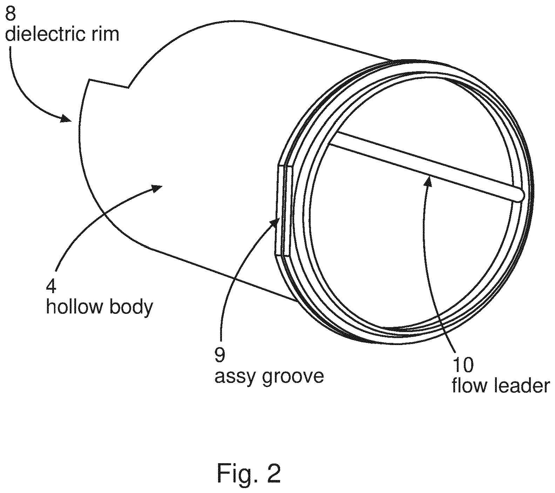

Figs. 2-3 relates to a new bushing or spout for a metal clad medium voltage switchgear, to the new bushing system and to the new holder piece.

The bushing for a metal clad medium voltage switchgear comprises
- a hollow body 4, and
- a holder piece 2.

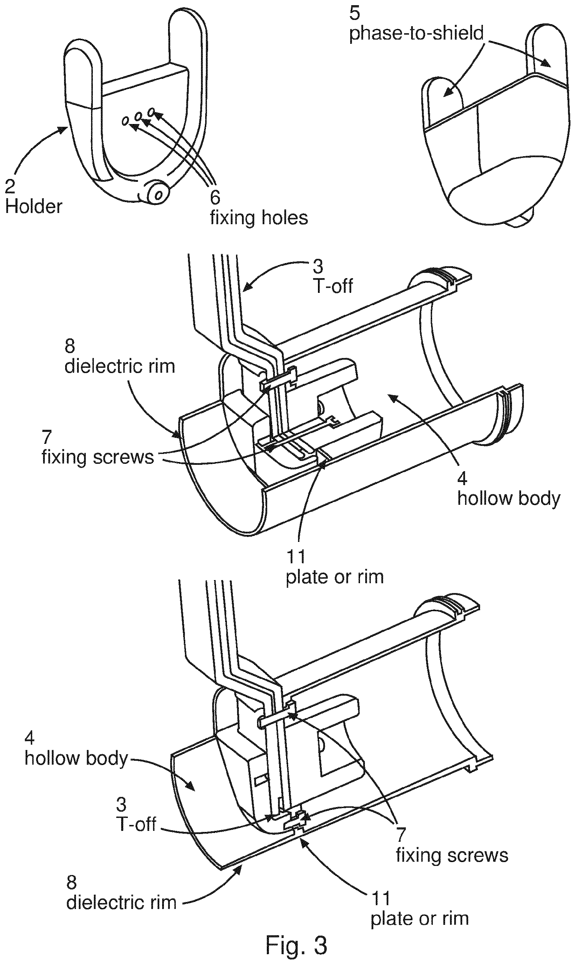

The hollow body comprises polyamide. An example of the hollow body is shown in complete form in Fig. 2 and two views of examples of the hollow body are shown in Fig. 3, where part of the hollow body has been cut away to aid visualization. The holder piece comprises at least one metal. The holder piece comprises a body part and a shield 5. An example of the holder piece and its shield is shown in Fig, 3 in two views, where the shield in the example of Fig. 3 is shown with two "wings" that sit either side of the T-off. However, the holder piece may have only one "wing" that is located only next to one side of the T-off, where for example the other side of the T-off is spaced from other parts of the switchgear to an extent that flashover from that side is not anticipated. However, for ease of manufacture an identical holder piece with two wings can be made and used in all situations. Also, in Fig. 3 a bushing system is in effect shown, where a holder piece can be fitted to the hollow body, through connection to a plate 11 of the hollow body. However, a bushing can be manufactured with a holder piece already fixed to the hollow body and no connection of the holder piece to the hollow body is required as such. A first end of the hollow body is configured to connect to a compartment of a medium voltage switchgear. The holder piece is configured to connect a T-off bar 3 to a second end of the hollow body. The hollow body has an axis down the centre of the hollow body from the first end to the second end. The shield of the holder piece is located adjacent to a part of the T-off bar when the T-off bar is connected to the second end of the hollow body.

Thus, the new bushing has a integrated holder piece that mechanically fixes a T-off bar to the bushing and where the holder piece also has an electrical field forming function, and a separate shielding cover that normally surrounds the bushing is not required.

The new design of bushing leads to significant improvements of actual dielectric conditions on connections of T-off/monoblock/Spouts.

Partial discharges are reduced, and faster assembly is provided.

In an example, the hollow body is made from polyamide.

In an example, the holder piece is made from at least one metal;

According to an example, the holder piece is configured to connect the T-off bar to the second end of the hollow body via at least one screw 7 or bolt 7 fixing the T-off bar to the body part of the holder piece.

According to an example, the holder piece is fixedly attached to the second end of the hollow body.

According to an example, the shield of the holder piece is located at an axial position of the axis down the centre of the hollow body and when the T-off bar is connected to the second end of the hollow body the T-off bar is located at the axial position.

Thus, a bushing for one phase can dielectrically shield the T-off bar from other metallic parts of the switchgear compartment, where the shield can be located at one or more sides of the T-off bar. Thus, the bushing can be a bushing for one of three phases, and where each phase can have the new bushing and the bushings can dielectrically the T-offs for the different phases from one another.

According to an example, the shield of the holder piece comprises two wing segments on either side of the body part of the holder piece.

According to an example, the body part of the holder piece comprises a flat portion perpendicular to the axis down the centre of the hollow body. The flat portion of the body part of the holder piece comprises at least one fixing hole 6, and a flat portion of the part of the T-off is configured to connect to the flat portion of the holder piece.

According to an example, the body part of the holder piece comprises a ridge section with an inner surface parallel to the axis down the centre of the hollow body. An end portion of the of the part of the T-off is configured to butt up against the inner surface of the ridge section of the body part of the holder piece when the T-off bar is connected to the second end of the hollow body. Fig. 3 shows an example of the ridge section, that is effect shown as a continuation of the wing sections that continues around the edge of the body part of the holder from one wing section to the other wind section and forms an outer boundary to the flat part of the body part that is shown with three fixing holes. The T-off then can be shaped to fit snuggly in the recess formed by the ridge and be connected to the flat part of the body part via fixing screws/bolts and secure fixation is provided and less copper is required because the T-off can be slightly shorter than it would otherwise have been.

Thus, the end of the T-off does not need to sit against an inner surface of the hollow body and can be shorter, which saves in the amount of copper required and so saves costs.

According to an example, an outer surface of the hollow body portion is chamfered such that the outer surface is angled to the axis down the centre of the hollow body in a direction from the first end of the body to the second end of the body.

This improves water drainage in condensation conditions.

In an example, the chamfer is 0.5%.

In an example, the chamfer is 0.3%.

In an example, the chamfer is 1%.

In an example, the chamfer is 2%.

In an example, the chamfer is 5%.

In an example, the chamfer is 10%.

According to an example, the second end of the hollow body comprises a dielectric rim 8. The dielectric rim shown in Figs. 2-3 is not however essential.

It is been found that the dielectric rim improves dielectric performance.

According to an example, the first end of the body is configured to connect to the compartment of the switchgear via at least one assembly or assy groove 9.

In an example, an internal surface of the body portion comprises at least one flow leader 10.

The flow leaders facilitate manufacture of the part.

In an example, a flow leader 10 is in a direction perpendicular to the axis in the direction from the first end of the body to the second end of the body.

As discussed above, the holder piece can be integral with the bushing, but as shown in Fig. 3 it can be in effect separate to the hollow and could be used to retrofit existing hollow body to provide advantages as described. Such a bushing system for a metal clad medium voltage switchgear comprises:
- a hollow body 4, and
- a holder piece 2.

The hollow body comprises polyamide. The holder piece comprises at least one metal. The holder piece comprises a body part and a shield 5. A first end of the hollow body is configured to connect to a compartment of a medium voltage switchgear. The holder piece is configured to connect to the hollow body. The holder piece is configured to connect a T-off bar 3 to a second end of the hollow body. The hollow body has an axis down the centre of the hollow body from the first end to the second end. The shield of the holder piece is located adjacent to a part of the T-off bar when the T-off bar is connected to the second end of the hollow body.

Thus, the a bushing, that could be an existing bushing, can have a holder piece connected to it that mechanically fixes a T-off bar to the bushing and where the holder piece also has an electrical field forming function, and a separate shielding cover that normally surrounds the bushing is not required.

This leads to significant improvements of actual dielectric conditions on connections of T-off/monoblock/Spouts.

Partial discharges are reduced, and faster assembly is provided.

In an example, the hollow body is made from polyamide.

In an example, the holder piece is made from at least one metal.

According to an example, the holder piece is configured to connect to plate or rim 11 of the second end of the hollow body via at least one screw 7 or bolt 7 fixing the holder piece to the plate or rim.

According to an example, the holder piece is configured to connect the T-off bar to the second end of the hollow body via at least one screw 7 or bolt 7 fixing the T-off bar to the body part of the holder piece.

According to an example, the shield of the holder piece is configured to be located at an axial position of the axis down the centre of the hollow body when the holder piece is connected to the hollow body, and when the T-off bar is connected to the second end of the hollow body the T-off bar is located at the axial position.

Thus, a bushing for one phase can dielectrically shield the T-off bar from other metallic parts of the switchgear compartment, where the shield can be located at one or more sides of the T-off bar. Thus, the bushing can be a bushing for one of three phases, and where each phase can have the new bushing and the bushings can dielectrically the T-offs for the different phases from one another.

In an example, the shield of the holder piece comprises two wing segments on either side of the body part of the holder piece.

In an example, the body part of the holder piece comprises a flat portion configured to be perpendicular to the axis down the centre of the hollow body when the holder piece is connected to the hollow body. The flat portion of the body part of the holder piece comprises at least one fixing hole 6, and a flat portion of the part of the T-off is configured to connect to the flat portion of the holder piece.

In an example, the body part of the holder piece comprises a ridge section with an inner surface parallel to the axis down the centre of the hollow body when the holder piece is connected to the hollow body. An end portion of the of the part of the T-off is configured to butt up against the inner surface of the ridge section of the body part of the holder piece when the T-off bar is connected to the second end of the hollow body.

Thus, the end of the T-off does not need to sit against an inner surface of the hollow body and can be shorter, which saves in the amount of copper required and so saves costs.

In an example, an outer surface of the hollow body portion is chamfered such that the outer surface is angled to the axis down the centre of the hollow body in a direction from the first end of the body to the second end of the body.

This improves water drainage in condensation conditions.

In an example, the chamfer is 0.5%.

In an example, the chamfer is 0.3%.

In an example, the chamfer is 1%.

In an example, the chamfer is 2%.

In an example, the chamfer is 5%.

In an example, the chamfer is 10%.

In an example, the second end of the hollow body comprises a dielectric rim 8.

It is been found that the dielectric rim improves dielectric performance.

In an example, the first end of the body is configured to connect to the compartment of the switchgear via at least one assembly or assy groove 9.

In an example, an internal surface of the body portion comprises at least one flow leader 10.

The flow leaders facilitate manufacture of the part.

In an example, a flow leader 10 is in a direction perpendicular to the axis in the direction from the first end of the body to the second end of the body.

It is clear that a holder piece can be manufactured, that could for example be used to transform existing bushings into new bushing, with the advantages as discussed above. Such a holder piece 2 for a bushing of a metal clad medium voltage switchgear is described below. The bushing comprises a hollow body 4, and the hollow body comprises polyamide, and a first end of the hollow body is configured to connect to a compartment of a medium voltage switchgear, and the hollow body has an axis down the centre of the hollow body from the first end to a second end. The holder piece comprises at least one metal. The holder piece comprises a body part and a shield 5. The holder piece is configured to connect to the hollow body of the bushing. The holder piece when connected to the hollow body is configured to connect a T-off bar 3 to the second end of the hollow body. When the holder piece is connected to the hollow body of the bushing, the shield of the holder piece is located adjacent to a part of the T-off bar when the T-off bar is connected to the second end of the hollow body.

Thus, a bushing, that could be an existing bushing, can have a holder piece connected to it that mechanically fixes a T-off bar to the bushing and where the holder piece also has an electrical field forming function, and a separate shielding cover that normally surrounds the bushing is not required.

This leads to significant improvements of actual dielectric conditions on connections of T-off/monoblock/Spouts.

Partial discharges are reduced, and faster assembly is provided.

In an example, the hollow body is made from polyamide.

In an example, the holder piece is made from at least one metal.

In an example, the holder piece is configured to connect to plate or rim 11 of the second end of the hollow body via at least one screw 7 or bolt 7 fixing the holder piece to the plate or rim.

In an example, the holder piece is configured to connect the T-off bar to the second end of the hollow body via at least one screw 7 or bolt 7 fixing the T-off bar to the body part of the holder piece.

In an example, the holder piece is configured such that the shield of the holder piece is located at an axial position of the axis down the centre of the hollow body when the holder piece is connected to the hollow body, and when the T-off bar is connected to the second end of the hollow body the T-off bar is located at the axial position. Thus, the shield is adjacent to the sides of the T-off as shown in Fig. 3.

Thus, a bushing for one phase can dielectrically shield the T-off bar from other metallic parts of the switchgear compartment, where the shield can be located at one or more sides of the T-off bar. Thus, the bushing can be a bushing for one of three phases, and where each phase can have the new bushing and the bushings can dielectrically the T-offs for the different phases from one another.

In an example, the shield of the holder piece comprises two wing segments on either side of the body part of the holder piece.

In an example, the body part of the holder piece comprises a flat portion configured to be perpendicular to the axis down the centre of the hollow body when the holder piece is connected to the hollow body. The flat portion of the body part of the holder piece comprises at least one fixing hole 6, and a flat portion of the part of the T-off is configured to connect to the flat portion of the holder piece.

In an example, the body part of the holder piece comprises a ridge section with an inner surface parallel to the axis down the centre of the hollow body when the holder piece is connected to the hollow body. An end portion of the of the part of the T-off is configured to butt up against the inner surface of the ridge section of the body part of the holder piece when the T-off bar is connected to the second end of the hollow body.

Thus, the end of the T-off does not need to sit against an inner surface of the hollow body and can be shorter, which saves in the amount of copper required and so saves costs.

It is to be noted that a switchgear with one or more T-offs 3 can have one or more bushings each with an integrated holder piece 2 and/or one or more bushings to which holder pieces 2 have been connected and where the T-offs 3 are connected to the holder pieces to connect the T-offs to the bushings.

The new holder piece 2 has been developed through simulation based design with respect to mechanical strength and dielectric conditions, and provides for:
- A reduction in partial discharges
- Fastener-less assembly
- Fixes the T-off to the monoblock/spout
- Allows shortening of T-Off (material savings of copper)
- Compatible with new polyamide spouts
- Additional cover on spouts/monoblock is not needed
- Provides for a significant improvement of actual dielectric conditions on connections of T-off and monoblock/spouts

Thus, and optimized multifunctional structure - the holder piece - has been developed that is the result of optimization and evaluation, combining mechanical and electrical functions in one element. The multifunctional element acts as a holder for a T-off and at the same time acts as an electrical filed-forming electrode, reducing the number of parts used, assembly time, space in the switchgear, as well as supply chain demand.

## Claims

1. A bushing for a metal clad medium voltage switchgear, the bushing comprising:
- a hollow body (4); and
- a holder piece (2);
wherein the hollow body comprises polyamide;
wherein the holder piece comprises at least one metal;
wherein the holder piece comprises a body part and a shield (5);
wherein a first end of the hollow body is configured to connect to a compartment of a medium voltage switchgear;
wherein the holder piece is configured to connect a T-off bar (3) to a second end of the hollow body;
wherein the hollow body has an axis down the centre of the hollow body from the first end to the second end; and
wherein the shield of the holder piece is located adjacent to a part of the T-off bar when the T-off bar is connected to the second end of the hollow body.

2. Bushing according to claim 1, wherein the holder piece is configured to connect the T-off bar to the second end of the hollow body via at least one screw (7) or bolt (7) fixing the T-off bar to the body part of the holder piece.

3. Bushing according to any of claims 1-2, wherein the holder piece is fixedly attached to the second end of the hollow body.

4. Bushing according to any of claims 1-3, wherein the shield of the holder piece is located at an axial position of the axis down the centre of the hollow body and when the T-off bar is connected to the second end of the hollow body the T-off bar is located at the axial position.

5. Bushing according to any of claims 1-4, wherein the shield of the holder piece comprises two wing segments on either side of the body part of the holder piece.

6. Bushing according to any of claims 2-5, wherein the body part of the holder piece comprises a flat portion perpendicular to the axis down the centre of the hollow body, wherein the flat portion of the body part of the holder piece comprises at least one fixing hole (6), and a flat portion of the part of the T-off is configured to connect to the flat portion of the holder piece.

7. Bushing according to any of claims 1-6, wherein the body part of the holder piece comprises a ridge section with an inner surface parallel to the axis down the centre of the hollow body, and wherein an end portion of the of the part of the T-off is configured to butt up against the inner surface of the ridge section of the body part of the holder piece when the T-off bar is connected to the second end of the hollow body.

8. Bushing according to any of claims 1-7, wherein an outer surface of the hollow body portion is chamfered such that the outer surface is angled to the axis down the centre of the hollow body in a direction from the first end of the body to the second end of the body.

9. Bushing according to any of claims 1-8, wherein the second end of the hollow body comprises a dielectric rim (8).

10. Bushing according to any of claims 1-9, wherein the first end of the body is configured to connect to the compartment of the switchgear via at least one assembly or assy groove (9).

11. A bushing system for a metal clad medium voltage switchgear, the bushing comprising:
- a hollow body (4); and
- a holder piece (2);
wherein the hollow body comprises polyamide;
wherein the holder piece comprises at least one metal;
wherein the holder piece comprises a body part and a shield (5);
wherein a first end of the hollow body is configured to connect to a compartment of a medium voltage switchgear;
wherein the holder piece is configured to connect to the hollow body;
wherein the holder piece is configured to connect a T-off bar (3) to a second end of the hollow body;
wherein the hollow body has an axis down the centre of the hollow body from the first end to the second end; and
wherein the shield of the holder piece is located adjacent to a part of the T-off bar when the T-off bar is connected to the second end of the hollow body.

12. Bushing system according to claim 11, wherein the holder piece is configured to connect to plate or rim (11) of the second end of the hollow body via at least one screw (7) or bolt (7) fixing the holder piece to the plate or rim.

13. Bushing according to any of claims 11-12, wherein the holder piece is configured to connect the T-off bar to the second end of the hollow body via at least one screw (7) or bolt (7) fixing the T-off bar to the body part of the holder piece.

14. Bushing according to any of claims 11-13, wherein the shield of the holder piece is configured to be located at an axial position of the axis down the centre of the hollow body when the holder piece is connected to the hollow body, and when the T-off bar is connected to the second end of the hollow body the T-off bar is located at the axial position.

15. A holder piece (2) for a bushing of a metal clad medium voltage switchgear, the bushing comprising a hollow body (4), wherein the hollow body comprises polyamide, wherein a first end of the hollow body is configured to connect to a compartment of a medium voltage switchgear, wherein the hollow body has an axis down the centre of the hollow body from the first end to a second end, and
wherein the holder piece comprises at least one metal;
wherein the holder piece comprises a body part and a shield (5);
wherein the holder piece is configured to connect to the hollow body of the bushing;
wherein the holder piece when connected to the hollow body is configured to connect a T-off bar (3) to the second end of the hollow body; and
wherein when the holder piece is connected to the hollow body of the bushing, the shield of the holder piece is located adjacent to a part of the T-off bar when the T-off bar is connected to the second end of the hollow body.
